# EUROPEAN PATENT APPLICATION

(11) **EP 2 228 750 A2**
(43) Date of publication of application: **15.09.2010**
(21) Application number: 10154471.6
(22) Date of filing: 24.02.2010
(51) Int. Cl.: G06K 9/00, G06F 3/03, H04M 1/67

(54) **Mobile terminal and method of controlling the mobile terminal**

(30) Priority: 10.03.2009 KR 20090020432
(71) Applicant: LG Electronics Inc., Seoul 150-721 (KR)
(72) Inventor: Kim, Jong Hwan, 153-023, SEOUL (KR)
(74) Representative: Cabinet Plasseraud

(57) **Abstract**

A mobile terminal (100) and a method of controlling the mobile terminal are provided. The method includes storing (S200) a plurality of pieces of fingerprint information on at least one of a finger-by-finger basis, on a user-by-user basis, and a pattern-by-pattern basis; receiving (S205) a fingerprint-touch input through a display module capable of identifying a fingerprint-, and if fingerprint information of the received fingerprint-touch input matches with one of the plurality of pieces of fingerprint information, performing (S215) a first control operation corresponding to the fingerprint information that matches with the fingerprint information of the received fingerprint-touch input. Therefore, it is possible to control various operations performed by the mobile terminal in response to a fingerprint-touch input including fingerprint information.

## Description

### FIELD OF THE INVENTION

The present invention relates to a mobile terminal and a method of controlling the mobile terminal, and more particularly, to a mobile terminal and a method of controlling the mobile terminal, in which various operations performed by the mobile terminal can be effectively controlled in response to a fingerprint-touch input including fingerprint information.

### DESCRIPTION OF THE RELATED ART

Mobile terminals are portable devices, which can provide users with various services such as a voice calling service, a video calling service, an information input/output service, and a data storage service.

As the types of services provided by mobile terminals diversify, an increasing number of mobile terminals have been equipped with various complicated functions such as capturing photos or moving pictures, playing music files or moving image files, providing game programs, receiving broadcast programs and providing wireless internet services and have thus evolved into multimedia players.

Various attempts have been made to realize such complicated functions as hardware devices or software programs. For example, various user interface (UI) environments, in which users are allowed to easily search for and choose desired functions, have been developed. In addition, the demand for various designs for mobile terminals such as a double-sided liquid crystal display (LCD) or a full touch screen has steadily grown due to a growing tendency of considering mobile terminals as personal items that can represent personal individuality.

However, there is a restriction in allocating sufficient space for a UI (such as a display device or a keypad) of a mobile terminal without compromising the mobility and the portability of a mobile terminal. Therefore, it is necessary to develop ways to control the operation of a mobile terminal using a new data input/output method, other than an existing menu-based method, and thus efficiently use various functions provided by the mobile terminal.

### SUMMARY OF THE INVENTION

The present invention provides a mobile terminal and a method of controlling the mobile terminal, in which various operations performed by the mobile terminal can be effectively controlled in response to a fingerprint-touch input including fingerprint information.

According to an aspect of the present invention, there is provided a method of controlling a mobile terminal, the method including storing a plurality of pieces of fingerprint information on at least one of a finger-by-finger basis, on a user-by-user basis, and a pattern-by-pattern basis; receiving a fingerprint-touch input through a display module capable of identifying a fingerprint; and if fingerprint information of the received fingerprint-touch input matches with one of the plurality of pieces of fingerprint information, performing a first control operation corresponding to the fingerprint information that matches with the fingerprint information of the received fingerprint-touch input.

According to another aspect of the present invention, there is provided a mobile terminal including a display module configured to be capable of identifying a fingerprint; a memory configured to store a plurality of pieces of fingerprint information on at least one of a finger-by-finger basis, on a user-by-user basis, and a pattern-by-pattern basis; and a controller configured to receive a fingerprint-touch input through the display module and determine whether fingerprint information of the received fingerprint-touch input matches with any one of the plurality of pieces of fingerprint information, wherein, if there is a match for the fingerprint information of the received fingerprint-touch input in the memory, the controller performs a first control operation corresponding to the fingerprint information that matches with the fingerprint information of the received fingerprint-touch input.

According to another aspect of the present invention, there is provided a method of controlling a mobile terminal, the method including storing a plurality of pieces of fingerprint information on at least one of a finger-by-finger basis, on a user-by-user basis, and a pattern-by-pattern basis; displaying an operation screen on a display module capable of identifying a fingerprint, receiving a fingerprint-touch input through the display module, and selecting an item corresponding to the received fingerprint-touch input from the operation screen; and if fingerprint information of the received fingerprint-touch input matches with one of the plurality of pieces of fingerprint information, displaying first information regarding the selected item, corresponding to the fingerprint information that matches with the fingerprint information of the received fingerprint-touch input, on the display module.

According to another aspect of the present invention, there is provided a mobile terminal including a display module configured to be capable of identifying a fingerprint and display an operation screen; a memory configured to store a plurality of pieces of fingerprint information on at least one of a finger-by-finger basis, on a user-by-user basis, and a pattern-by-pattern basis; and a controller configured to receive a fingerprint-touch input through the display module and select an item corresponding to the received fingerprint-touch input from the operation screen, wherein, if fingerprint information of the received fingerprint-touch input matches with one of the plurality of pieces of fingerprint information, the controller displays first information regarding the selected item, corresponding to the fingerprint information that matches with the fingerprint information of the received fingerprint-touch input on the display module.

According to another aspect of the present invention, there is provided a method of controlling a mobile terminal, the method including storing a plurality of pieces of fingerprint information on at least one of a finger-by-finger basis, on a user-by-user basis, and a pattern-by-pattern basis; displaying an operation screen on a display module capable of identifying a fingerprint, receiving a fingerprint-touch input through the display module, and selecting a menu icon, corresponding to the received fingerprint-touch input from the operation screen; and if fingerprint information of the received fingerprint-touch input matches with one of the plurality of pieces of fingerprint information, executing a first menu item of the selected menu icon corresponding to the fingerprint information that matches with the fingerprint information of the received fingerprint-touch input.

According to another aspect of the present invention, there is provided a mobile terminal including a display module configured to be capable of identifying a fingerprint and display an operation screen; a memory configured to store a plurality of pieces of fingerprint information on at least one of a finger-by-finger basis, on a user-by-user basis, and a pattern-by-pattern basis; and a controller configured to receive a fingerprint-touch input through the display module and select a menu icon corresponding to the received fingerprint-touch input from the operation screen, wherein, if fingerprint information of the received fingerprint-touch input matches with one of the plurality of pieces of fingerprint information, the controller executes a first menu item of the selected menu icon, corresponding to the fingerprint information that matches with the fingerprint information of the received fingerprint-touch input.

### BRIEF DESCRIPTION OF THE DRAWINGS

The above and other features and advantages of the present invention will become more apparent by describing in detail preferred embodiments thereof with reference to the attached drawings in which:

FIG. 1 illustrates a block diagram of a mobile terminal according to an exemplary embodiment of the present invention;

FIG. 2 illustrates a front perspective view of the mobile terminal shown in FIG. 1;

FIG. 3 illustrates a rear perspective view of the mobile terminal shown in FIG. 1;

FIGS. 4 through 8 illustrate the structure of a display module capable of identifying a fingerprint, which can be used in the mobile terminal shown in FIG. 1;

FIG. 9 illustrates a flowchart of a method of controlling a mobile terminal according to a first exemplary embodiment of the present invention;

FIG. 10 illustrates a flowchart of a method of controlling a mobile terminal according to a second exemplary embodiment of the present invention;

FIG. 11 illustrates a flowchart of a method of controlling a mobile terminal according to a third exemplary embodiment of the present invention;

FIGS. 12 through 16 illustrate how to register fingerprint information;

FIG. 17 illustrates how to perform various control operations in response to a fingerprint-touch input;

FIG. 18 illustrates how to display various information in response to a fingerprint-touch input; and

FIGS. 19 and 20 illustrate how to execute various items in response to a fingerprint-touch input.

### DETAILED DESCRIPTION OF THE INVENTION

The present invention will hereinafter be described in detail with reference to the accompanying drawings in which exemplary embodiments of the invention are shown.

The term 'mobile terminal', as used herein, may indicate a mobile phone, a smart phone, a laptop computer, a digital broadcast receiver, a personal digital assistant (PDA), a portable multimedia player (PMP), or a navigation device. In this disclosure, the terms 'module' and 'unit' can be used interchangeably.

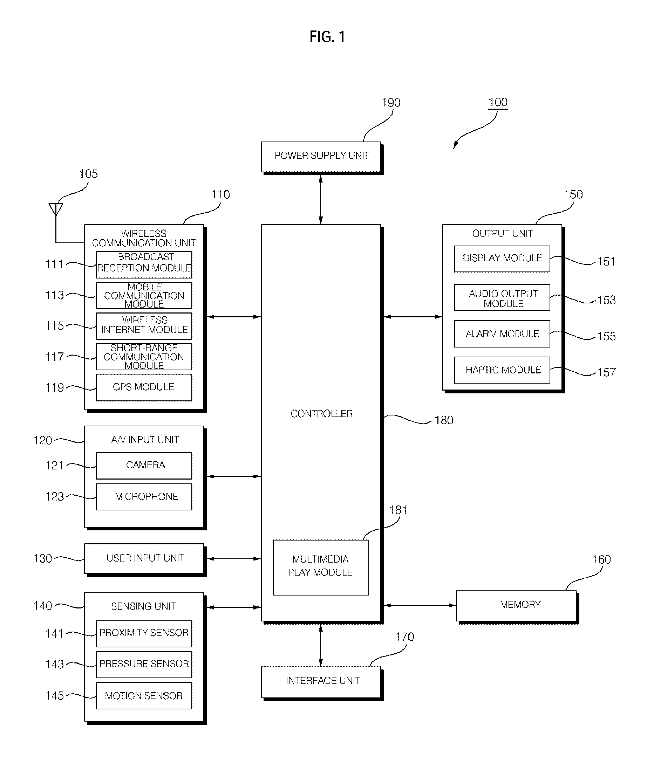

FIG. 1 illustrates a block diagram of a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Two or more of the wireless communication unit 110, the A/V input unit 120, the user input unit 130, the sensing unit 140, the output unit 150, the memory 160, the interface unit 170, the controller 180, and the power supply unit 190 may be incorporated into a single unit, or some of the wireless communication unit 110, the A/V input unit 120, the user input unit 130, the sensing unit 140, the output unit 150, the memory 160, the interface unit 170, the controller 180, and the power supply unit 190 may be divided into two or more smaller units.

The wireless communication unit 110 may include a broadcast reception module 111, a mobile communication module 113, a wireless internet module 115, a short-range communication module 117, and a global positioning system (GPS) module 119.

The broadcast reception module 111 may receive a broadcast signal and/or broadcast-related information from an external broadcast management server through a broadcast channel. The broadcast channel may be a satellite channel or a terrestrial channel. The broadcast management server may be a server which generates broadcast signals and/or broadcast-related information and transmits the generated broadcast signals and/or the generated broadcast-related information or may be a server which receives and then transmits previously-generated broadcast signals and/or previously-generated broadcast-related information.

The broadcast-related information may include broadcast channel information, broadcast program information and/or broadcast service provider information. The broadcast signal may be a TV broadcast signal, a radio broadcast signal, a data broadcast signal, the combination of a data broadcast signal and a TV broadcast signal or the combination of a data broadcast signal and a radio broadcast signal. The broadcast-related information may be provided to the mobile terminal 100 through a mobile communication network. In this case, the broadcast-related information may be received by the mobile communication module 113, rather than by the broadcast reception module 111. The broadcast-related information may come in various forms. For example, the broadcast-related information may be electronic program guide (EPG) of digital multimedia broadcasting (DMB) or may be electronic service guide (ESG) of digital video broadcast-handheld (DVB-H).

The broadcast reception module 111 may receive the broadcast signal using various broadcasting systems such as digital multimedia broadcasting-terrestrial (DMB-T), digital multimedia broadcasting-satellite (DMB-S), media forward link only (MediaFLO), DVB-H, and integrated services digital broadcast-terrestrial (ISDB-T). In addition, the broadcast reception module 111 may be configured to be suitable for nearly all types of broadcasting systems other than those set forth herein. The broadcast signal and/or the broadcast-related information received by the broadcast reception module 111 may be stored in the memory 160.

The mobile communication module 113 may transmit wireless signals to or receive wireless signals from at least one of a base station, an external terminal, and a server through a mobile communication network. The wireless signals may include various types of data according to whether the mobile terminal 100 transmits/receives voice call signals, video call signals, or text/multimedia messages.

The wireless internet module 115 may be a module for wirelessly accessing the internet. The wireless internet module 115 may be embedded in the mobile terminal 100 or may be installed in an external device. The wireless internet module 115 may be embedded in the mobile terminal 100 or may be installed in an external device. The wireless internet module 115 may use various wireless internet technologies such as wireless local area network (WLAN), Wireless Broadband (WiBro), World Interoperability for Microwave Access (Wimax), and High Speed Downlink Packet Access (HSDPA).

The short-range communication module 117 may be a module for short-range communication. The short-range communication module 117 may use various short-range communication techniques such as Bluetooth, radio frequency identification (RFID), infrared data association (IrDA), ultra wideband (UWB), and ZigBee.

The GPS module 119 may receive position information from a plurality of GPS satellites.

The A/V input unit 120 may be used to receive audio signals or video signals. The A/V input unit 120 may include a camera 121 and a microphone 123. The camera 121 may process various image frames such as still images or moving images captured by an image sensor during a video call mode or an image capturing mode. The image frames processed by the camera 121 may be displayed by a display module 151.

The image frames processed by the camera 121 may be stored in the memory 160 or may be transmitted to an external device through the wireless communication unit 110. The mobile terminal 100 may include two or more cameras 121.

The microphone 123 may receive external sound signals during a call mode, a recording mode, or a voice recognition mode with the use of a microphone and may convert the sound signals into electrical sound data. In the call mode, the mobile communication module 113 may convert the electrical sound data into data that can be readily transmitted to a mobile communication base station and then output the data obtained by the conversion. The microphone 123 may use various noise removal algorithms to remove noise that may be generated during the reception of external sound signals.

The user input unit 130 may generate key input data based on user input for controlling the operation of the mobile terminal 100. The user input unit 130 may be implemented as a keypad, a dome switch, a touch pad (static pressure/static voltage), a jog wheel, or a jog switch. In particular, if the user input unit 130 is implemented as a touch pad and forms a layer structure together with the display module 151, the user input unit 130 and the display module 151 may be collectively referred to as a touch screen.

The sensing unit 140 determines a current state of the mobile terminal 100 such as whether the mobile terminal 100 is opened up or closed, the position of the mobile terminal 100 and whether the mobile terminal 100 is placed in contact with a user, and generates a sensing signal for controlling the operation of the mobile terminal 100. For example, when the mobile terminal 100 is a slider-type mobile phone, the sensing unit 140 may determine whether the mobile terminal 100 is opened up or closed. In addition, the sensing unit 140 may determine whether the mobile terminal 100 is powered by the power supply unit 190 and whether the interface unit 170 is connected to an external device.

The sensing unit 140 may include a proximity sensor 141, a pressure sensor 143 and a motion sensor 145. The proximity sensor 141 may determine whether there is an object nearby and approaching the mobile terminal 100 without any mechanical contact with the entity. More specifically, the proximity sensor 141 may detect an object that is nearby and approaching by detecting a change in an alternating magnetic field or the rate of change of static capacitance. The sensing unit 140 may include two or more proximity sensors 141.

The pressure sensor 143 may determine whether pressure is being applied to the mobile terminal 100 or may measure the level of pressure, if any, applied to the mobile terminal 100. The pressure sensor 143 may be installed in a certain part of the mobile terminal 100 where the detection of pressure is necessary. For example, the pressure sensor 143 may be installed in the display module 151. In this case, it is possible to differentiate a typical touch input from a pressure touch input, which is generated using a higher pressure level than that used to generate a typical touch input, based on data provided by the pressure sensor 143. In addition, when a pressure touch input is received through the display module 151, it is possible to determine the level of pressure applied to the display module 151 upon the detection of a pressure touch input based on data provided by the pressure sensor 143.

The motion sensor 145 may determine the location and motion of the mobile terminal 100 using an acceleration sensor or a gyro sensor.

In the meantime, acceleration sensors are a type of device for converting a vibration in acceleration into an electric signal. With recent developments in micro-electromechanical system (MEMS) technology, acceleration sensors have been widely used in various products for various purposes ranging from detecting large motions such as car collisions as performed in airbag systems for automobiles to detecting minute motions such as the motion of the hand as performed in gaming input devices. In general, one or more acceleration sensors representing two or three axial directions are incorporated into a single package. There are some cases when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate, and the additional substrate may be mounted on a main substrate.

Gyro sensors are sensors for measuring angular velocity, and may determine the relative direction of the rotation of the mobile terminal 100 to a reference direction.

The output unit 150 may output audio signals, video signals and alarm signals. The output unit 150 may include the display module 151, an audio output module 153, an alarm module 155, and a haptic module 157.

The display module 151 may display various information processed by the mobile terminal 100. For example, if the mobile terminal 100 is in a call mode, the display module 151 may display a user interface (UI) or a graphic user interface (GUI) for making or receiving a call. If the mobile terminal 100 is in a video call mode or an image capturing mode, the display module 151 may display a UI or a GUI for capturing or receiving images.

If the display module 151 and the user input unit 130 form a layer structure together and are thus implemented as a touch screen, the display module 151 may be used as both an output device and an input device. If the display module 151 is implemented as a touch screen, the display module 151 may also include a touch screen panel and a touch screen panel controller. The touch screen panel is a transparent panel attached onto the exterior of the mobile terminal 100 and may be connected to an internal bus of the mobile terminal 100. The touch screen panel keeps monitoring whether the touch screen panel is being touched by the user. Once a touch input to the touch screen panel is received, the touch screen panel transmits a number of signals corresponding to the touch input to the touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display module 151 may include electronic paper (e-paper). E-paper is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules.

The display module 151 may include at least one of a liquid crystal display (LCD), a thin film transistor (TFT)-LCD, an organic light-emitting diode (OLED), a flexible display, and a three-dimensional (3D) display. The mobile terminal 100 may include two or more display modules 151. For example, the mobile terminal 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data present in the memory 160. In addition, the audio output module 153 may output various sound signals associated with the functions of the mobile terminal 100 such as receiving a call or a message. The audio output module 153 may include a speaker and a buzzer.

The alarm module 155 may output an alarm signal indicating the occurrence of an event in the mobile terminal 100. Examples of the event include receiving a call signal, receiving a message, and receiving a key signal. Examples of the alarm signal output by the alarm module 155 include an audio signal, a video signal and a vibration signal. More specifically, the alarm module 155 may output an alarm signal upon receiving a call signal or a message. In addition, the alarm module 155 may receive a key signal and may output an alarm signal as feedback to the key signal. Therefore, the user may be able to easily recognize the occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects (such as vibration) that can be perceived by the user. If the haptic module 157 generates vibration as a haptic effect, the intensity and the pattern of vibration generated by the haptic module 157 may be altered in various manners. The haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 may be configured to enable the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data such as a phonebook, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage, which performs the functions of the memory 160 on the internet.

The interface unit 170 may interface with an external device that can be connected to the mobile terminal 100. The interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

When the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the general operation of the mobile terminal 100. For example, the controller 180 may perform various control operations regarding making/receiving a voice call, transmitting/receiving data, or making/receiving a video call. The controller 180 may include a multimedia play module 181, which plays multimedia data. The multimedia play module 181 may be implemented as a hardware device and may be installed in the controller 180. Alternatively, the multimedia play module 181 may be implemented as a software program.

The power supply unit 190 may be supplied with power by an external power source or an internal power source and may supply power to the other components in the mobile terminal 100.

The mobile terminal 100 may include a wired/wireless communication system or a satellite communication system and may thus be able to operate in a communication system capable of transmitting data in units of frames or packets.

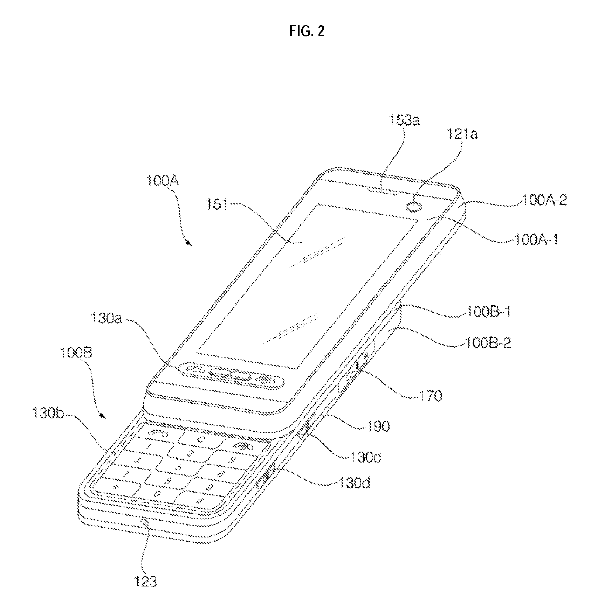

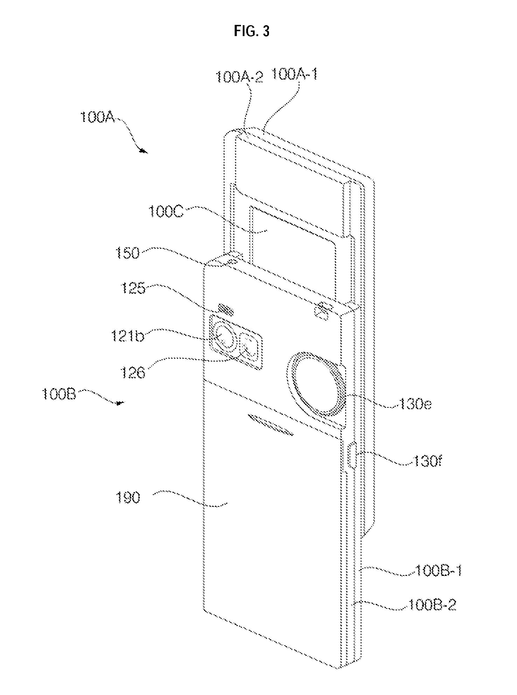

The exterior of the mobile terminal 100 will hereinafter be described in detail with reference to FIGS. 2 and 3. For convenience, assume that the mobile terminal 100 is a slider-type mobile terminal equipped with a touch screen. However, the present invention is not restricted to a slider-type mobile terminal. Rather, the present invention can be applied to various mobile phones, other than a slider-type mobile terminal.

FIG. 2 illustrates a front perspective view of the mobile terminal 100 shown in FIG. 1. Referring to FIG. 2, the mobile terminal 100 may include a first body 100A and a second body 100B which can slide up or down against the first body 100A.

When the first body 100A and the second body 100B completely overlap each other, the mobile terminal 100 is referred to as being closed. On the other hand, when the first body 100A is slid up against the second body 100B and thus the front of the second body 100B is partially exposed, as shown in FIG. 2, the mobile terminal 100 is referred to as being open.

When the mobile terminal 100 is closed, the mobile terminal may generally operate in a standby mode and may be released from the standby mode in response to user manipulation. On the other hand, when the mobile terminal 100 is open, the mobile terminal 100 may generally operate in a call mode and may be switched to the standby mode either manually in response to user manipulation or automatically after the lapse of a predefined amount of time.

Referring to FIG. 2, the exterior of the first body 100A may be defined by a first front case 100A-1 and a first rear case 100A-2. Various electronic devices may be installed in the space formed by the first front case 100A-1 and the first rear case 100A-2. At least one intermediate case may be additionally provided between the first front case 100A-1 and the first rear case 100A-2. The first front case 100A-1 and the first rear case 100A-2 may be formed of a synthetic resin through injection molding. Alternatively, the first front case 100A-1 and the first rear case 100A-2 may be formed of a metal such as stainless steel (STS) or titanium (Ti).

The display module 151, a first audio output module 153a, a first camera 121a and a first user input unit 130a may be disposed in the front case 100A-1.

Examples of the display module 151 include an LCD and an OLED which can visualize information. Since a touch pad is configured to overlap the display module 151 and thus to form a layer structure, the display module 151 may serve as a touch screen. Thus, it is possible for the user to input various information to the mobile terminal 100 simply by touching the display module 151.

The exterior of the second body 100B may be defined by a second front case 100B-1 and a second rear case 100B-2. A second user input unit 130b may be disposed in the second body 100B, and particularly, at the front of the second front case 100B-1. Third and fourth user input units 130c and 130d, the microphone 123 and the interface unit 170 may be provided in the second front case 100B-1 or the second rear case 100B-2.

The first through fourth user input units 130a through 130d and fifth and sixth user input units 130e and 130f may be collectively referred to as the user input unit 130. The user input unit 130 may adopt various manipulation methods as long as it can offer tactile feedback to the user.

The first user input unit 130a may allow the user to input various commands such as 'start', 'end', and 'scroll' to the mobile terminal 100, the second user input unit 130b may be used to input various numerals, characters or symbols, and the third and fourth user input units 130c and 130d may be used as hot keys for activating certain functions of the mobile terminal 100.

The microphone 123 may be configured to properly receive the user's voice or other sounds.

FIG. 3 illustrates a rear perspective view of the mobile terminal 100 shown in FIG. 2. Referring to FIG. 3, the fifth user input unit 130e, which is of a wheel type, and the second camera 121 b may be disposed at the rear of the second rear case 100B-2 of the second body 100B, and a sixth user input unit 130f may be disposed on one side of the second body 100B.

The second camera 121b may have a different photographing direction from that of the first camera 121a shown in FIG. 2. In addition, the first and second cameras 121a and 121b may have different resolutions. For example, the first camera 121a may be used to capture and then transmit an image of the face of the user during a video call. Thus, a low-resolution camera may be used as the first camera 121 a. The second camera 121 b may be used to capture an image of an ordinary subject. In this case, the image captured by the second camera 121b may not need to be transmitted. Thus, a high-resolution camera may be used as the second camera 121b.

A camera flash 125 and a mirror 126 may be disposed near the second camera 121 b. The camera flash 125 may be used to illuminate a subject when the user attempts to capture an image of the subject with the second camera 121 b. The mirror 126 may be used for the user to prepare him- or herself for taking a self shot.

A second audio output module (not shown) may be additionally provided in the second rear case 100B-2. The second audio output module may realize a stereo function along with the first audio output module 153a. The second audio output module may also be used in a speaker-phone mode.

An antenna (not shown) for receiving a broadcast signal may be disposed on one side of the second rear case 100B-2. The antenna may be installed so as to be able to be pulled out of the second rear case 100B-2.

A slide module 100C may be partially exposed on the first rear case 100A-2 of the first body 100A. The slide module 100C may couple the first body 100A and the second body 100B such that the first body 100A and the second body 100B can slide up and down against each other. A portion of the slide module 100C may be hidden from view by the second front case 100B-1 of the second body 100B, and thus may not be exposed.

The second camera 121b and the other elements that have been described as being provided on the rear case 100A-2 may be provided on the front case 100A-1. In addition, the first camera 121 a may be configured to be rotatable and thus to cover the photographing direction of the second camera 121b. In this case, the second camera 121b may be optional.

The power supply unit 190 may be disposed in the rear case 100A-2. The power supply unit may be a rechargeable battery and may be coupled to the rear case 100A-2 so as to be attachable to or detachable from the rear case 100A-2.

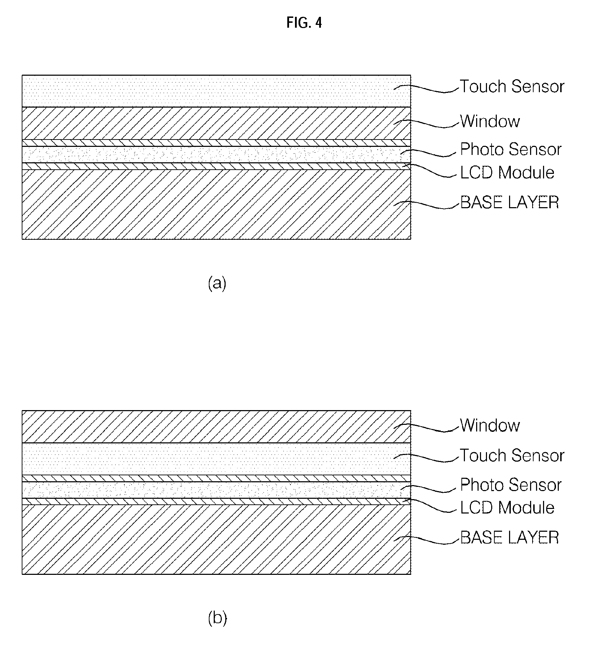

FIGS. 4 through 8 illustrate the structure of the display module 151, which is capable of identifying a fingerprint. A touch input made by placing a pointer such as a pen in contact with the surface of the display module 151 will hereinafter be referred to as an ordinary touch input, and a touch input made by placing the user's finger in contact with the surface of the display module 151 so as to provide fingerprint information will hereinafter be referred to as a fingerprint-touch input.

In order to generate a fingerprint-touch input, the display module 151 may need to be configured to be able to identify a fingerprint. For this, the display module 151 may include an LCD module with a photo sensor embedded therein or an LCD module covered with a scan film with a photo sensor.

Referring to FIGS. 4(a) and 4(b), the display module 151 may include an LCD module having a photo sensor embedded therein. A touch sensor may be disposed on the top or bottom of a window. More specifically, the display module 151 may include a stack of a base layer, an LCD module, a photo sensor, a window, and a touch sensor, as shown in FIG. 4(a), or may include a stack of the base layer, the LCD module, the photo sensor, the touch sensor and the window, as shown in FIG. 4(b).

The display module 151 may also be configured, without using the touch sensor, to be able to identify a fingerprint by using a scan structure of the photo sensor. In this case, the display module 151 may include a stack of the base layer, the LCD module, the photo sensor and the window.

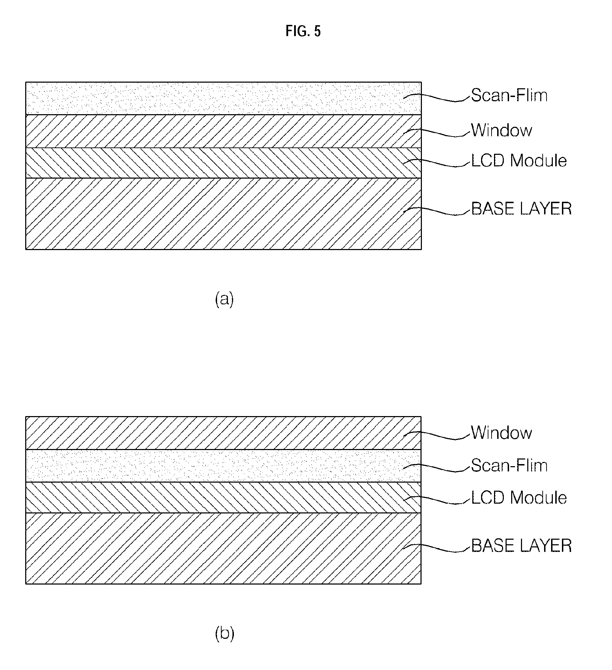

Alternatively, referring to FIGS. 5(a) through 6(c), the display module 151 may include an LCD module covered with a scan film having a photo sensor. More specifically, the display module 151 may include a stack of a base layer, an LCD module, a window and a transparent scan film, as shown in FIG. 5(a), or may include a stack of the base layer, the LCD module, the transparent scan film and the window, as shown in FIG. 5(b).

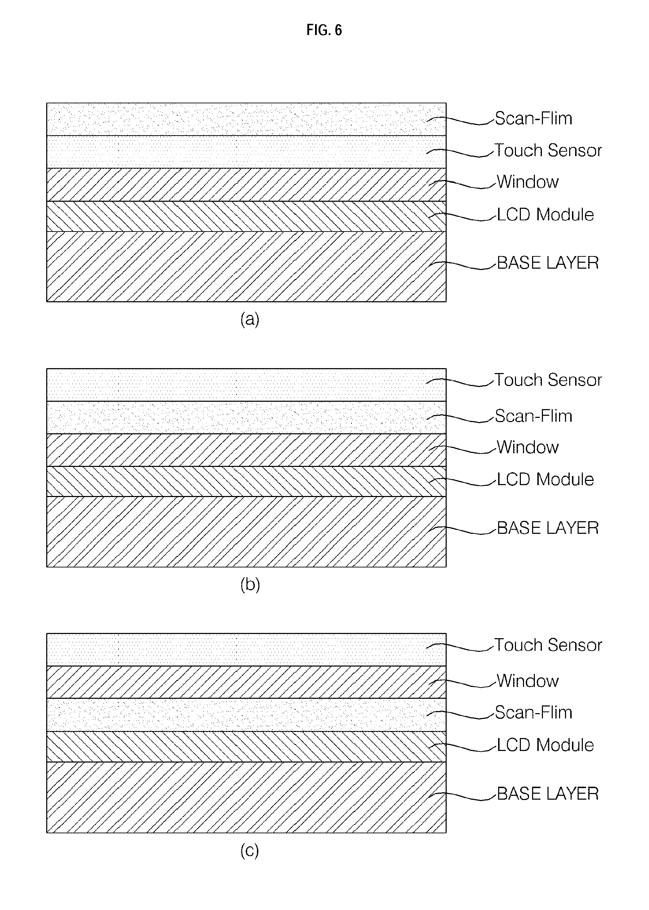

Referring to FIGS. 6(a) through 6(c), the display module 151 may include both a scan film and a touch sensor. More specifically, the display module 151 may include a stack of a base layer, an LCD module, a window, the touch sensor and the scan film, as shown in FIG. 6(a), may include a stack of the base layer, the LCD module, the window, the scan film and the touch sensor, as shown in FIG. 6(b), or may include a stack of the base layer, the LCD module, the scan film, the window, and the touch sensor, as shown in FIG. 6(c).

The touch sensor may be disposed at the top or bottom of the window. Thus, the display module 151 may have a structure in which the base layer, the LCD module, the touch sensor, the window and the scan film are sequentially deposited, a structure in which the base layer, the LCD module, the touch sensor, the photo sensor and the window are sequentially deposited, or a structure in which the base layer, the LCD module, the photo sensor, the touch sensor and the window are sequentially deposited.

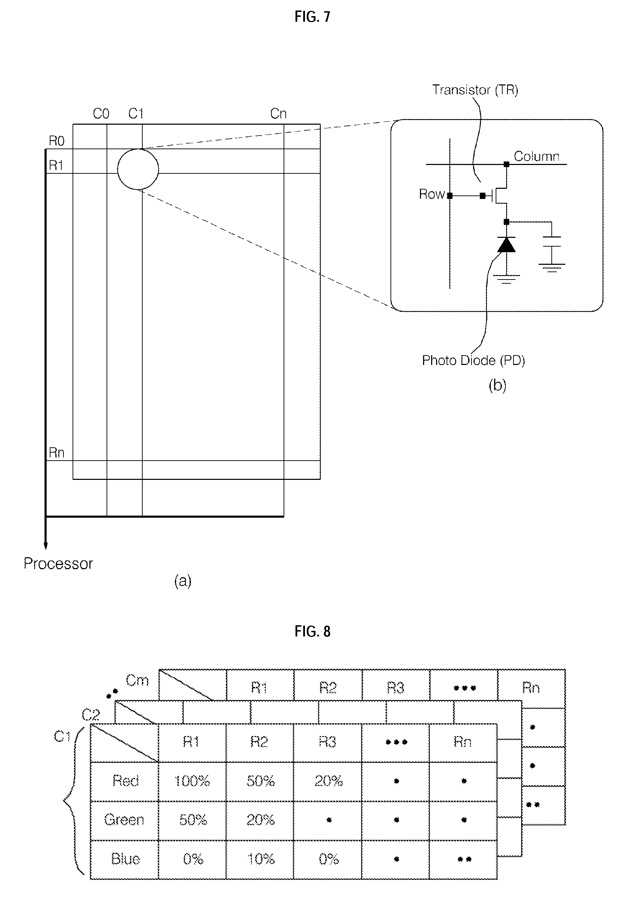

Referring to FIG. 7, a scan film may include a transparent film, which is formed of a transparent material such as glass, and a plurality of photodiodes PD and a plurality of transistors TR, which are mounted on the transparent film and are disposed at the intersections of a plurality of rows Ro through Rₙ and a plurality of columns Co through Cₙ on the transparent film. Thus, the scan film may be able to scan any object placed thereon by using an electric signal whose level varies according to the amount of light applied to the photodiodes.

It is possible to perform a black-and-white scan operation including fingerprint identification by using a basic scan function of the scan film. In addition, it is possible to perform a color scan operation. In addition, it is possible to perform a color scan operation by combining light reflected from each pixel of the LCD module at the rear of the display module 151. In this case, the amount of red, green or blue light reflected from each pixel of the LCD module may be calculated using tables shown in FIG. 8, and red, green and blue light may be combined based on the results of the calculation. However, the present invention is not restricted to this. That is, various matrices or functions, other than the tables shown in FIG. 8, may be used to combine red, green and blue light.

Since the display module 151 can calculate coordinates based on a variation in the amount of light by using a photo sensor, the display module 151 not only can perform a scan operation but also can serve as an input device capable of receiving various types of touch inputs such as a single- or a multi-touch input.

As described above, the display module 151 may be able not only to perform a scan operation but also to receive various types of touch inputs by using a scan structure of a photo sensor without a requirement of a touch sensor. When no touch sensor is used in the display module 151, the manufacturing cost of the display module 151 can be reduced. On the other hand, when a touch sensor is used in the display module 151, the recognition of a touch input can be stabilized. The display module 151 has been described above as identifying a fingerprint using a photo sensor, but the present invention is not restricted to this. That is, the display module 151 may identify a fingerprint using various methods other than using a photo sensor.

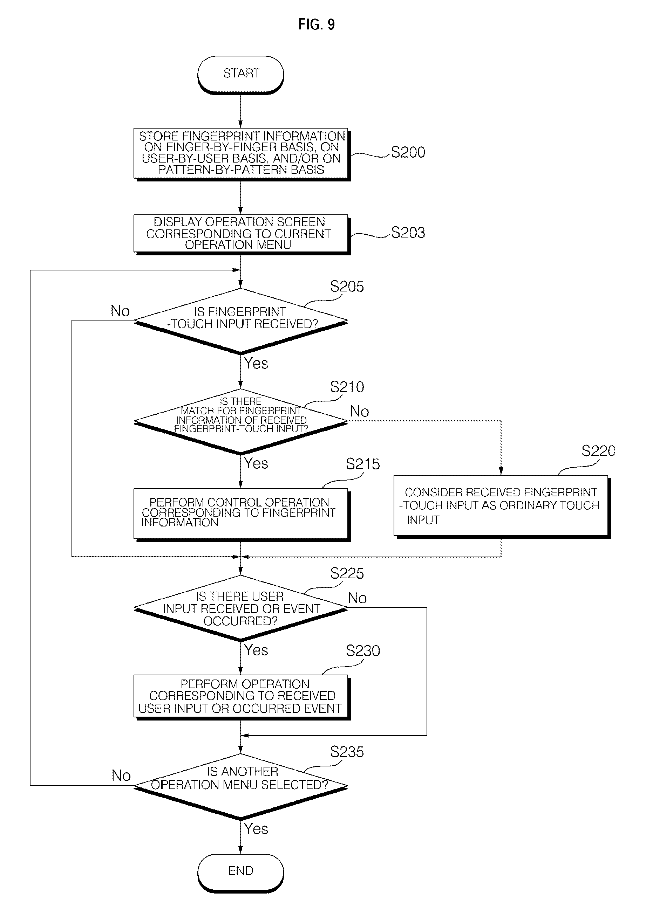

FIG. 9 illustrates a flowchart of a method of controlling a mobile terminal according to a first exemplary embodiment of the present invention. Referring to FIG. 9, a plurality of pieces of fingerprint information may be stored in the memory 160 on a finger-by-finger basis, on a user-by-user basis and/or on a pattern-by-pattern basis (S200). More specifically, the plurality of pieces of fingerprint information may include fingerprints acquired from different fingers of an individual or fingerprints acquired from different individuals. Alternatively, the plurality of pieces of fingerprint information may include fingerprints having different patterns in consideration that fingerprints acquired even from the same finger can often appear different due to variations in the degree to which, and the pressure with which the finger is brought into contact with the display module 151.

Thereafter, the controller 180 may display an operation screen corresponding to a current menu or operation on the display module 151 (S203). Examples of the operation screen displayed in operation S203 include an idle screen, a message reception screen, a main menu screen, a still- or moving-image viewer screen, a broadcast screen, a map screen and a webpage screen.

Thereafter, the controller 180 may determine whether there is a fingerprint-touch input received through the display module 151 (S205). A fingerprint-touch input is a touch input made by placing the user's finger on the surface of the display module 151, and includes fingerprint information.

If it is determined in operation S205 that there is a fingerprint-touch input received through the display module 151, the controller 180 may determine whether fingerprint information of the received fingerprint-touch input matches with any one of the plurality of pieces of fingerprint information present in the memory 160 (S210). If it is determined in operation S210 that there is a match for the fingerprint information of the received fingerprint-touch input in the memory 160, the controller 180 may control an operation corresponding to the fingerprint information that matches with the fingerprint information of the received fingerprint-touch input to be performed (S215). For this, the user may set in advance what operation is to be performed in connection with each of the plurality of pieces of fingerprint information present in the memory 160. The controller 180 may generate a haptic effect while performing the operation corresponding to the fingerprint information that matches with the fingerprint information of the received fingerprint-touch input.

If none of the plurality of pieces of fingerprint information present in the memory 160 match up with the fingerprint information of the received fingerprint-touch input, the controller 180 may consider the received fingerprint-touch input as an ordinary touch input and may then control an operation corresponding to a point of detection of the received fingerprint-touch input to be performed (S220).

Thereafter, if a user input is received or an event occurs (S225), the controller 180 may control an operation corresponding to the received user input or the event to be performed (S230). Operations S205 through S230 may be repeatedly performed until the user selects an operating mode or menu other than the current operating mode or menu (S235).

In this manner, it is possible to perform various control operations for different pieces of fingerprint information in response to a fingerprint-touch input.

More specifically, various control operations may be performed in response to a fingerprint-touch input. Examples of the various control operations include a 'copy' operation, a 'move' operation, a 'paste' operation, a 'delete' operation, a 'delete all' operation, a 'hide/show' operation, a 'zoom-in/zoom-out' operation, an 'attach' operation, a 'capture' operation, a 'record' operation, an 'add' operation, an 'edit' operation, a 'view' operation, a 'view details' operation, a 'sort' operation, a 'search' operation, a 'dial' operation, a 'send message' operation, a 'send Infrared Data Association (IrDA)' operation, and a 'send Bluetooth' operation.

Various control operations may be performed in connection with different pieces of fingerprint information acquired from different individuals. For example, the 'copy' operation may be performed in response to a fingerprint-touch input generated by a first user, and the 'move' operation may be performed in response to a fingerprint-touch input generated by a second user.

Alternatively, various control operations may be associated with different pieces of fingerprint information acquired from different fingers of the same user. For example, the 'send message' operation may be associated with fingerprint-touch input generated by the thumb, the 'copy' operation may be associated with a fingerprint-touch input generated by the index finger, the 'paste' operation may be associated with a fingerprint-touch input generated by the middle finger, the 'delete' operation may be associated with a fingerprint-touch input generated by the ring finger, and the 'attach' operation may be associated with a fingerprint-touch input generated by the little finger. Thereafter, if the user touches and thus selects one of a list of phone numbers displayed on the display module 151 with a thumb when a phonebook menu is executed, a message may be sent to the selected phone number. If the user touches and thus selects a shortcut number with a thumb when a shortcut number menu is executed, a message may be sent to the selected shortcut number. If the user touches and thus selects one of a plurality of photos or moving images displayed on the display module 151 with an index finger when a photo/moving image-viewer menu is executed, the selected photo or moving image may be copied. Thereafter, if the user touches the selected photo or moving image again with a middle finger, the selected photo or moving image may be pasted. If the user touches and thus selects one of a plurality of messages displayed on the display module 151 with a ring finger when a message menu is executed, the selected message may be deleted. If the user touches and thus selects one of a plurality of photos or moving images displayed on the display module 151 with a little finger when the photo/moving image-viewer menu is executed, the selected photo or moving image may be attached to a message or file to be sent.

The mobile terminal 100 may be configured to be switched between a plurality of character-input modes such as a number-input mode, a Korean-input mode, an English-input mode and a symbol-input mode in response to a fingerprint-touch input without the need to use a mode switch key. For this, the character-input modes may be associated with different pieces of fingerprint information acquired from different fingers of the user in response to, for example, a user command. For example, if the user touches the display module 151 with an index finger, the mobile terminal 100 may be switched to the Korean-input mode. On the other hand, if the user touches the display module 151 with a middle finger, the mobile terminal 100 may be switched to the English-input mode.

Different functions may be performed in response to a fingerprint-touch input according to how the fingerprint-touch input is generated. For example, if the user touches a photo displayed on the display module 151 with an index finger for less than a predefined amount of time, the photo may be attached to, for example, a file to be sent. On the other hand, if the user touches the photo with the index finger for more than the predetermined amount of time, the photo may be captured.

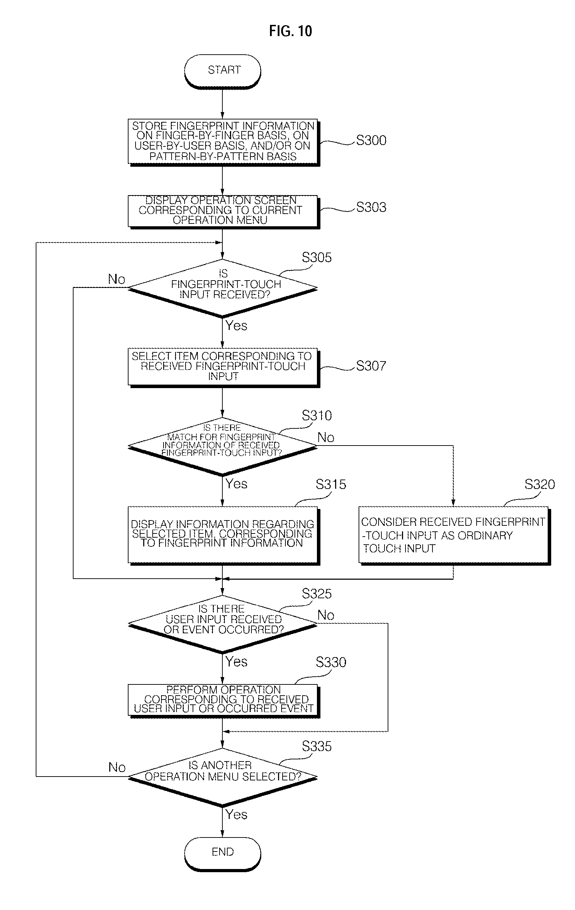

FIG. 10 illustrates a flowchart of a method of controlling a mobile terminal according to a second exemplary embodiment of the present invention. Referring to FIG. 10, operations S300, S303, S305, S320, S325, S330 and S335 are the same as operations S200, S203, S205, S220, S225, S230 and S235, respectively, of FIG. 9, and thus, detailed descriptions thereof will be omitted.

Referring to FIG. 10, if it is determined in operation S305 that there is a fingerprint-touch input received through the display module 151, the controller 180 may control an item corresponding to the received fingerprint-touch input to be selected from an operation screen currently being displayed on the display module 151 (S305). The selected item may be displayed differently from other items displayed on the current operation screen and may thus be able to be easily distinguished from the other items. For example, the selected item may be displayed in a different color or shape from the other items. The controller 180 may control a haptic effect corresponding to the selected item to be generated.

Thereafter, the controller 180 may determine whether fingerprint information of the received fingerprint-touch input matches with any one of a plurality of pieces of fingerprint information present in the memory 160 (S310). If it is determined in operation S310 that there is a match for the fingerprint information of the received fingerprint-touch input in the memory 160, the controller 180 may display one of a plurality of pieces of information corresponding to the fingerprint information that matches with the fingerprint information of the received fingerprint-touch input regarding the selected item on the display module 180 (S315).

The plurality of pieces of information regarding the selected item may be displayed in connection with different pieces of fingerprint information acquired from different individuals. The plurality of pieces of information regarding the selected item may include general information, additional information and execution information regarding the selected item.

For example, the general information regarding the selected item may be displayed in response to a fingerprint-touch input generated by a first user, and the additional information regarding the selected item may be displayed in response to a fingerprint-touch input generated by a second user.

Alternatively, the plurality of pieces of information regarding the selected item may be displayed in connection with different pieces of fingerprint information acquired from different fingers of the same user. For example, if the user touches a menu icon displayed on an idle screen with an index finger, an ordinary menu may be displayed. On the other hand, if the user touches a menu icon displayed on an idle screen with a middle finger, a multimedia menu may be displayed. If the user touches a phonebook item with an index finger, general information regarding the phonebook item may be displayed. On the other hand, if the user touches the phonebook item with a middle finger, additional information regarding the phonebook item may be displayed. If the user touches a keyboard icon with an index finger during a dictionary search operation, an ordinary keypad may be displayed. On the other hand, if the user touches the keyboard icon with the index finger during the dictionary search operation, a QWERTY keypad may be displayed.

In the second exemplary embodiment, an image or information may be displayed differently in response to a fingerprint-touch input according to how the fingerprint-touch input is generated. For example, if the user touches a thumbnail of a photo with an index finger for less than a predetermined amount of time, the photo may be displayed in a regular-view mode. On the other hand, if the user touches the thumbnail image of the photo with the index finger for more than the predetermined amount of time, the photo may be displayed in a full-view mode on the entire display module 151. For this, the user may decide in advance how the photo should be displayed on the display module 151 in response to a fingerprint-touch input.

According to the second exemplary embodiment, it is possible to display different information according to the type of fingerprint-touch input.

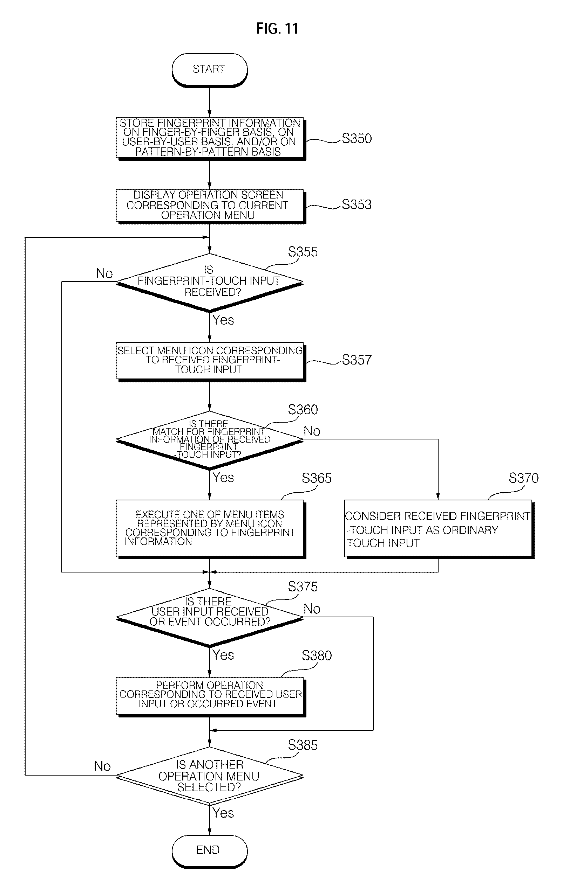

FIG. 11 illustrates a flowchart of a method of controlling a mobile terminal according to a third exemplary embodiment of the present invention. Referring to FIG. 11, operations S350, S353, S355, S370, S375, S380 and S385 are the same as operations S200, S203, S205, S220, S225, S230 and S235, respectively, of FIG. 9, and thus, detailed descriptions thereof will be omitted.

Referring to FIG. 11, if it is determined in operation S355 that there is a fingerprint-touch input received through the display module 151, the controller 180 may control a menu icon corresponding to the received fingerprint-touch input to be selected from an operation screen currently being displayed on the display module 151 (S357). The selected menu icon may be displayed differently from other menu icons displayed on the current operation screen and may thus be able to be easily distinguished from the other menu icons. A haptic effect corresponding to the selected menu icon may be generated.

Thereafter, the controller 180 may determine whether fingerprint information of the received fingerprint-touch input matches with any one of a plurality of pieces of fingerprint information present in the memory 160 (S360). If it is determined in operation S360 that there is a match for the fingerprint information of the received fingerprint-touch input in the memory 160, the controller 180 may execute one of a number of menu items corresponding to the fingerprint information that matches with the fingerprint information of the received fingerprint-touch input (S365).

Examples of the execution of a menu item as performed in operation S365 include searching through a phonebook, making a call to or sending a message to a phone number or a shortcut number, accessing a website, receiving and displaying a broadcast program and scrolling a webpage screen.

More specifically, if the user generates a fingerprint-touch input when a plurality of shortcut numbers are associated with different fingerprints acquired from different fingers of the user, the mobile terminal 100 may make a call to or send a message to a shortcut number corresponding to a finger used for generating the fingerprint-touch input. Alternatively, if the user generates a fingerprint-touch input by touching a broadcast icon when a plurality of channels are associated with different fingerprints acquired from different fingers of the user, the mobile terminal 100 may display a broadcast program received from a channel corresponding to a finger used for generating the fingerprint-touch input. Still alternatively, if the user generates a fingerprint-touch input when a plurality of uniform resource locators (URLs) are associated with different fingerprints acquired from different fingers of the user, the mobile terminal 100 may readily access a website corresponding to a finger used for generating the fingerprint-touch input. Still alternatively, if the user generates a fingerprint-touch input when certain points on a webpage screen are associated with different fingerprints acquired from different fingers of the user, the mobile terminal 100 may readily move to a point on the webpage screen corresponding to a finger used for generating the fingerprint-touch input without the need to manually scroll the webpage screen.

In the third exemplary embodiment, different menu items may be executed in response to a fingerprint-touch input according to how the fingerprint-touch input is generated. For example, if the user touches a menu icon with an index finger for less than a predefined amount of time when an idle screen is displayed on the display module 151, an 'electronic dictionary' menu may be executed. On the other hand, if the user touches the menu icon with the index finger for more than the predefined amount of time when the idle screen is displayed on the display module 151, a 'subway route map' menu may be executed.

Alternatively, if the user touches a 'call' icon with an index finger for less than a predefined amount of time when an idle screen is displayed on the display module 151, a voice call may be performed. On the other hand, if the user touches the 'call' icon with the index finger for more than the predefined amount of time when the idle screen is displayed on the display module 151, a video call may be performed.

According to the third exemplary embodiment, it is possible to execute different menu items in connection with different fingerprint information.

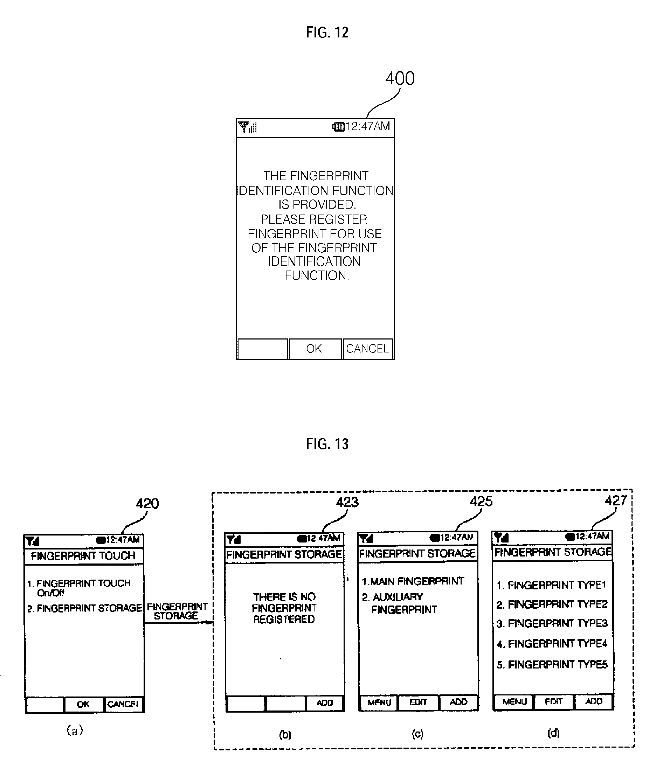

FIGS. 12 through 16 illustrate how to register fingerprint information in the mobile terminal 100.

Referring to FIG. 12, if no fingerprint is registered in the mobile terminal 100 when the mobile terminal 100 is turned on, a fingerprint registration alert screen 400 recommending that fingerprint information be registered may be displayed on the display module 151. When no fingerprint is registered in the mobile terminal 100, a fingerprint-touch input may be treated as an ordinary touch input.

FIG. 13(a) illustrates a fingerprint registration setting screen 420. Referring to FIG. 13(a), a 'fingerprint touch on/off' item may be used to turn on or off a fingerprint touch function, and a 'fingerprint storage' item may provide various fingerprint management functions such as the registration, editing, and deletion of fingerprints, and the setting or cancellation of main fingerprints.

Referring to FIG. 13(b), if the 'fingerprint storage' item is selected when no fingerprint is registered in the mobile terminal 100, a screen 423 indicating that there is no fingerprint registered in the mobile terminal 100 may be displayed. On the other hand, referring to FIG. 13(c) or 13(d), if the 'fingerprint storage' item is selected when there are fingerprints registered in the mobile terminal 100, a screen 425 or 427 may be displayed. Alternatively, a screen for registering fingerprints from different fingers may be displayed. Thereafter, if a 'menu' item is selected, a menu including a plurality of menu items such as 'add fingerprint,' 'edit fingerprint,' 'set main fingerprint,' 'delete fingerprint,' and 'delete all fingerprints' may be displayed.

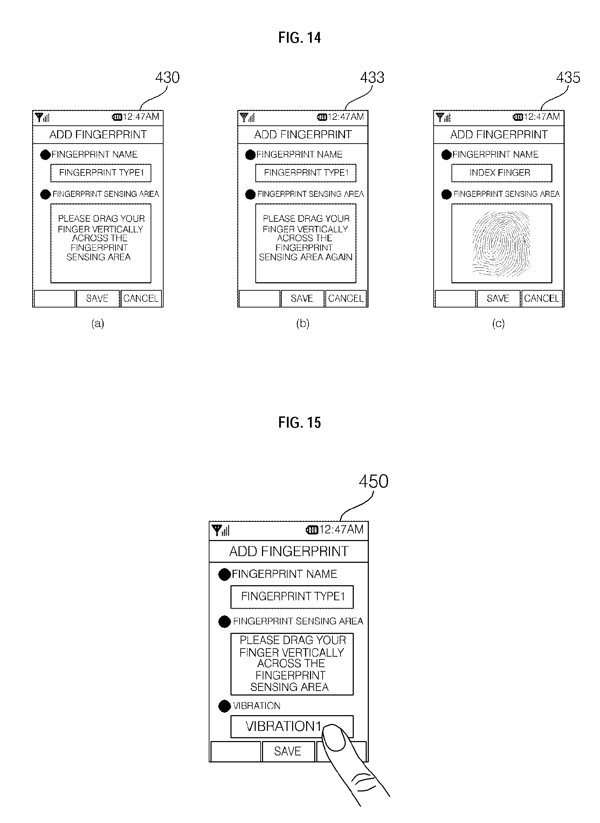

Referring to FIGS. 14(a) through 14(c), the user may drag a finger vertically across a fingerprint sensing area on a fingerprint identification screen 430 and may thus allow the mobile terminal 100 to sense a fingerprint of the user. A fingerprint can be registered in the mobile terminal 100 only when the user successfully enters the fingerprint more than a predefined number of times. A fingerprint sensed by the mobile terminal 100 may be saved in the memory 160 with a name for future reference.

The whole surface of the display module 151 may be used as a fingerprint sensing area. Alternatively, for a more efficient fingerprint registration or identification, a certain part of the surface of the display module 151 may be set and used as a valid fingerprint sensing area.

FIG. 15 illustrates a haptic effect setting screen 450 for registering a haptic effect to be generated in connection with a fingerprint. Referring to FIG. 15, different haptic effects may be registered for different individuals, for different fingerprints or for different fingerprint patterns. Then, if a fingerprint-touch input is received, a haptic effect corresponding to fingerprint information of the received fingerprint-touch input may be generated. The intensity and pattern of the haptic effect may be altered in response to a touch input or a key input generated by the user.

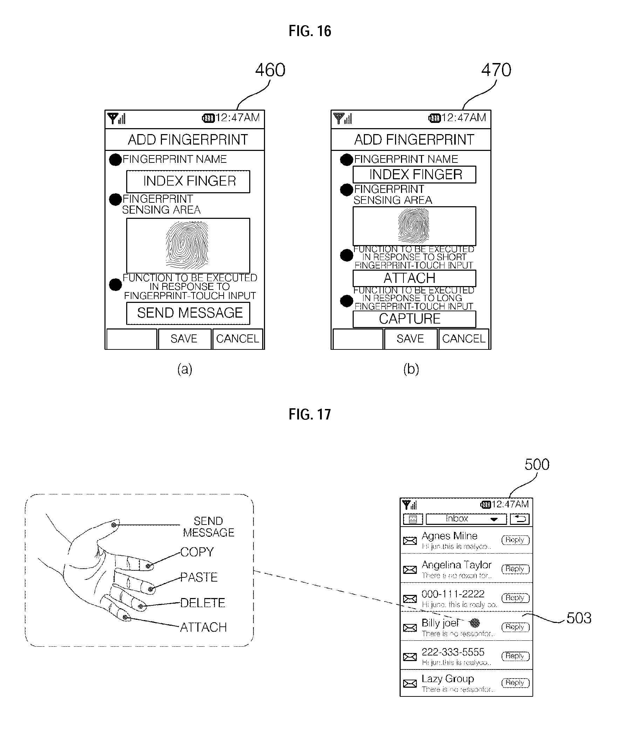

FIGS. 16(a) and 16(b) illustrate screens 460 and 470, respectively, for registering a function to be performed in connection with a fingerprint. Referring to FIGS. 16(a) and 16(b), a control operation to be performed in response to a fingerprint-touch input or information to be displayed in response to a fingerprint-touch input may be registered using the screens 460 and 470. Different functions may be registered for different fingerprints. Alternatively, the same function may be registered for two or more different fingerprints. More specifically, one of a number of fingerprints acquired from different fingers of the user may be registered as a main fingerprint, and the other fingerprints may be registered as auxiliary fingerprints in case of injury to a finger whose print is registered as the main fingerprint.

FIG. 17 illustrates how to perform various control operations in response to a fingerprint-touch input. Referring to FIG. 17, different control operations may be associated with different fingerprints. For example, the fingerprint of the thumb may be associated with a 'send message' operation, the fingerprint of the index finger may be associated with a 'copy' operation, the fingerprint of the middle finger may be associated with a 'paste' operation, the fingerprint of the ring finger may be associated with a 'delete' operation and the fingerprint of the little finger may be associated with an 'attach' operation.

Then, if the user touches an item 503 displayed on a message screen 500 with a ring finger, the item 503 may be deleted. On the other hand, if the user touches the item with a thumb, a message may be sent to a person represented by the item 503.

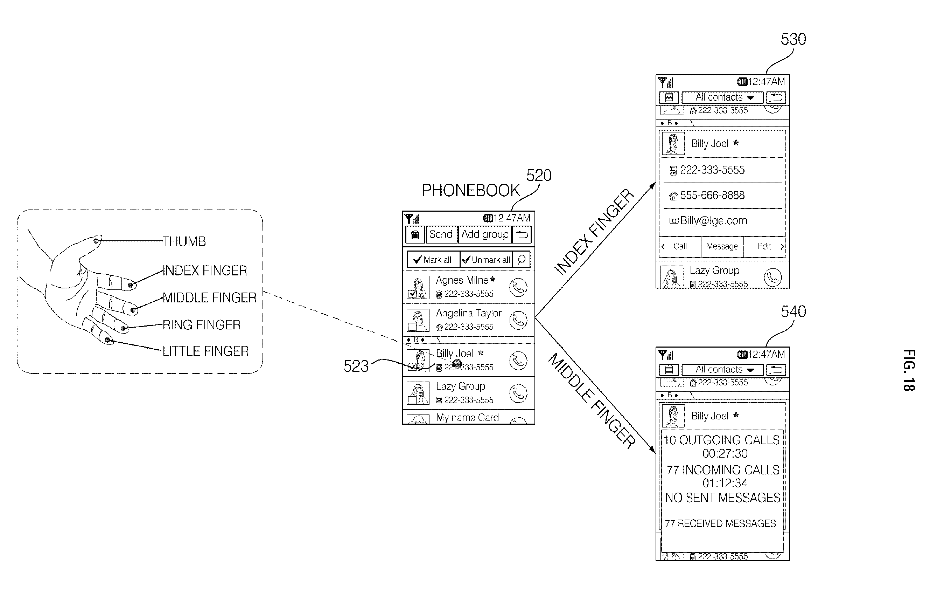

FIG. 18 illustrates how to display various information in response to a fingerprint-touch input. Referring to FIG. 18, if the user touches an item 523 displayed on a phonebook menu screen 520 with an index finger, a screen 530 showing general information 530 regarding the item 523 such as the name, phone number, shortcut number, email address, and birthday of a person represented by the item 523 may be displayed. On the other hand, if the user touches the item 523 with a middle finger, a screen 540 showing additional information regarding the item 523 such as the number and times of outgoing calls to the person represented by the item 523, the number and times of incoming calls from the person represented by the item 523, the number of outgoing messages to the person represented by the item 523 and the number of incoming messages from the person represented by the item 523 may be displayed.

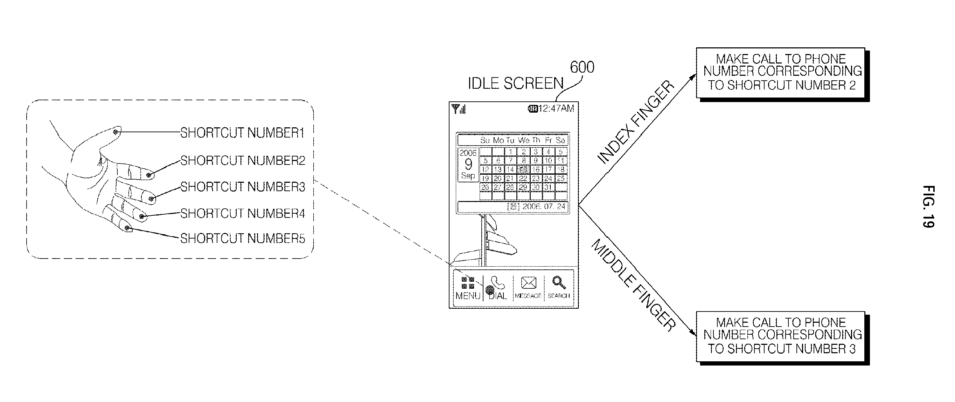

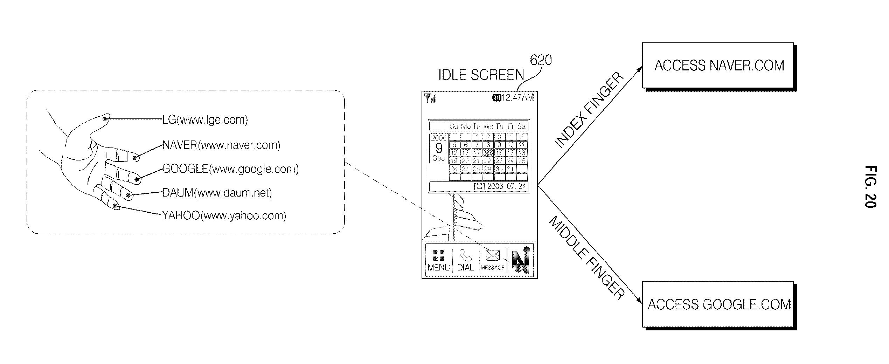

FIGS. 19 and 20 illustrate how to execute various menu items in response to a fingerprint-touch input. Referring to FIG. 19, if a 'dial' menu icon is selected from an idle screen 600 in response to a fingerprint-touch input generated by an index finger, a call may be made to a phone number corresponding to shortcut number 2. On the other hand, if the 'dial' menu icon is selected in response to a fingerprint-touch input generated by a middle finger, a call may be made to a phone number corresponding to shortcut number 3.

When a 'message' menu icon is selected, the mobile terminal 100 may be switched between various character-input modes in response to a fingerprint-touch input. For example, if the user generates a fingerprint-touch input with an index finger, the mobile terminal 100 may be switched to a Korean-input mode, and thus, the user can write a message in Korean. On the other hand, if the user generates a fingerprint-touch input with a middle finger, the mobile terminal 100 may be switched to an English-input mode, and thus, the user can write a message in English. On the other hand, if the user generates a fingerprint-touch input with a ring finger, the mobile terminal 100 may be switched to a special character-input mode, and thus, the user can input special characters. The switching of the mobile terminal 100 between various character-input modes can be applied to various operations other than the writing of a message.

Referring to FIG. 20, if the user touches and thus selects an 'internet' menu icon displayed on an idle screen 620 with an index finger, Naver.com may be accessed. On the other hand, if the user touches and selects the 'internet' menu icon with a middle finger, Google.com may be accessed.

When a predetermined website is accessed and thus a webpage screen is displayed on the display module 151, the user can move around the webpage screen, for example, from an address input area to a menu bar area, from a state indicator area to a login information input area, or from the middle of the webpage screen to an upper left part or upper right part of the webpage screen, simply by touching the webpage screen with a finger.

In addition, various operations performed by the mobile terminal 100 may be controlled in response to a fingerprint-touch input. Moreover, the user may be subjected to fingerprint-based authentication. In this case, if the user fails to be authenticated more than a predefined number of times, a password-based authentication screen may be automatically displayed on the display module 151, thereby allowing the user to enter a password and thus to be authenticated.

The mobile terminal according to the present invention and the method of controlling the mobile terminal according to the present invention are not restricted to the exemplary embodiments set forth herein. Therefore, variations and combinations of the exemplary embodiments set forth herein may fall within the scope of the present invention.

The present invention can be realized as code that can be read by a processor (such as a mobile station modem (MSM)) included in a mobile terminal and that can be written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to the present invention, it is possible to store a plurality of pieces of fingerprint information on a finger-by-finger basis, a user-by-user basis, and/or a pattern-by-pattern basis and thus to perform various control operations or display various information according to fingerprint information of a received fingerprint-touch input. In addition, it is possible to control various operations performed by a mobile terminal in response to a fingerprint-touch input. Moreover, it is possible to facilitate the authorization and control of a mobile terminal by using not only an ordinary key input and an ordinary touch input but also a fingerprint-touch input.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of controlling a mobile terminal, the method comprising:
storing (S200) a plurality of fingerprint data in a memory of the mobile terminal, the plurality of fingerprint data being stored on at least one of a finger-by-finger basis, a user-by-user basis, or a pattern-by-pattern basis;
receiving (S205) a fingerprint-touch input via a controller through a touch display of the mobile terminal, the touch display being configured to identify fingerprints;
determining (S210) via the controller if fingerprint data of the received fingerprint-touch input matches one of the plurality of fingerprint data stored in the memory; and
performing (S215) a first control operation corresponding to the fingerprint data if the fingerprint data of the received fingerprint-touch input is determined to match one of the plurality of fingerprint data stored in the memory,.

2. The method of claim 1, further comprising recognizing (S220) the received fingerprint-touch input as an ordinary touch input and performing a predefined operation corresponding to a point of detection of the received fingerprint-touch input if the fingerprint data of the received fingerprint-touch input is determined to not match one of the plurality of fingerprint data stored in the memory.

3. The method of claim 1 or 2, further comprising performing a second control operation, the second control operation being different from the first control operation, if the fingerprint data of the received fingerprint-touch input is determined to match one of the plurality of fingerprint data stored in the memory and the received fingerprint-touch input is sensed for more than a predefined amount of time.

4. The method of any one of claims 1 to 3, further comprising generating a haptic effect corresponding to the matched fingerprint data if the fingerprint data of the received fingerprint-touch input is determined to match one of the plurality of fingerprint data stored in the memory.

5. A mobile terminal (100) comprising:
a touch display (151) configured to identify fingerprints;
a memory (160) configured to store a plurality of fingerprint data, the plurality of fingerprint data being stored on at least one of a finger-by-finger basis, a user-by-user basis, or a pattern-by-pattern basis; and
a controller (180) configured to receive a fingerprint-touch input via the touch display, determine whether fingerprint data of the received fingerprint-touch input matches one of the plurality of fingerprint data stored in the memory, and perform a first control operation corresponding to the matched fingerprint data if the fingerprint data of the received fingerprint-touch input is determined to match one of the plurality of fingerprint data stored in the memory.

6. The mobile terminal of claim 5, wherein the controller is further configured to recognize the received fingerprint-touch input as an ordinary touch input and to perform a predefined operation corresponding to a point of detection of the received fingerprint-touch input if the fingerprint data of the received fingerprint-touch input is determined to not match any of the plurality of fingerprint data stored in the memory.

7. The mobile terminal of claim 5 or 6, wherein the controller is further configured to perform a second control operation, different from the first control operation, if the fingerprint data of the received fingerprint-touch input is determined to match one of the plurality of fingerprint data stored in the memory and the received fingerprint-touch input is sensed for more than a predefined amount of time.

8. A method of controlling a mobile terminal, the method comprising:
storing (S300) a plurality of fingerprint data in a memory of the mobile terminal, the plurality of fingerprint data being stored on at least one of a finger-by-finger basis, a user-by-user basis, or a pattern-by-pattern basis;
displaying (S303) an operation screen on a touch display of the mobile terminal, the touch display being configured to identify fingerprints;
receiving (S305) a fingerprint-touch input via a controller through the touch display;
selecting (S307) an item from the operation screen via the controller, the selected item corresponding to the received fingerprint-touch input;
determining (S310) via the controller if fingerprint data of the received fingerprint-touch input matches one of the plurality of fingerprint data stored in the memory; and
displaying (S315) first information related to the selected item on the touch display if the fingerprint data of the received fingerprint-touch input is determined to match one of the plurality of fingerprint data stored in the memory,
wherein the first information corresponds to the matched fingerprint data.

9. The method of claim 8, further comprising displaying second information regarding the selected item on the touch display if the fingerprint data of the received fingerprint-touch input is determined to match one of the plurality of fingerprint data stored in the memory and the received fingerprint-touch input is sensed for more than a predefined amount of time, wherein the second information is different than the first information.

10. A mobile terminal (100) comprising:
a touch display (151) configured to identify fingerprints and to display an operation screen;
a memory (160) configured to store a plurality of fingerprint data, the plurality of fingerprint data being stored on at least one of a finger-by-finger basis, a user-by-user basis, or a pattern-by-pattern basis; and
a controller (180) configured to receive a fingerprint-touch input via the touch display, select an item from the operation screen corresponding to the received fingerprint-touch input, determine whether fingerprint data of the received fingerprint-touch input matches one of the plurality of fingerprint data stored in the memory, and display first information regarding the selected item on the touch display if the fingerprint data of the received fingerprint-touch input is determined to match one of the plurality of fingerprint data stored in the memory,
wherein the first information corresponds to the matched fingerprint data.

11. The mobile terminal of claim 10, wherein the controller is further configured to display second information related to the selected item on the touch display, the second information being different from the first information, if the fingerprint data of the received fingerprint-touch input is determined to match one of the plurality of fingerprint data stored in the memory and the received fingerprint-touch input is sensed for more than a predefined amount of time.

12. A method of controlling a mobile terminal, the method comprising:
storing (S350) a plurality of fingerprint data in a memory of the mobile terminal, the plurality of fingerprint data being stored on at least one of a finger-by-finger basis, a user-by-user basis, or a pattern-by-pattern basis;
displaying (S353) an operation screen on a touch display of the mobile terminal, the touch display configured to identify fingerprints;
displaying a plurality of menu icons on the operation screen;
receiving (S355) a fingerprint-touch input via a controller through the touch display;
selecting a menu icon from the plurality of menu icons displayed on the operation screen, the selected menu icon corresponding to the received fingerprint-touch input;
determining (S360) via the controller if fingerprint data of the received fingerprint-touch input matches one of the plurality of fingerprint data stored in the memory; and
executing (S365) a first function of the selected menu icon if the fingerprint data of the received fingerprint-touch input is determined to match one of the plurality of fingerprint data stored in the memory,
wherein the first function corresponds to the matched fingerprint data.

13. The method of claim 12, further comprising executing a second function of the selected menu icon if the fingerprint data of the received fingerprint-touch input is determined to match one of the plurality of fingerprint data stored in the memory and the received fingerprint-touch input is sensed for more than a predefined amount of time, wherein the second function is different than the first function.

14. A mobile terminal (100) comprising:
a touch display (151) configured to identify fingerprints, display an operation screen, and display a plurality of menu icons on the operation screen;
a memory (160) configured to store a plurality of fingerprint data, the plurality of fingerprint data stored on at least one of a finger-by-finger basis, a user-by-user basis, or a pattern-by-pattern basis; and
a controller (180) configured to receive a fingerprint-touch input via the touch display, select a menu icon from the plurality of menu icons displayed on the operation screen that corresponds to the received fingerprint-touch input, determine whether fingerprint data of the received fingerprint-touch input matches one of the plurality of fingerprint data stored in the memory, and execute a first function of the selected menu icon that corresponds to the matched fingerprint data if the fingerprint data of the received fingerprint-touch input is determined to match one of the plurality of fingerprint data stored in the memory.

15. The mobile terminal of claim 14, wherein the controller is further configured to execute a second function of the selected menu icon that is different from the first function if the fingerprint data of the received fingerprint-touch input is determined to match one of the plurality of fingerprint data stored in the memory and the received fingerprint-touch input is sensed for more than a predefined amount of time.
